# DEMANDE DE BREVET EUROPEEN

(11) **EP 2 439 571 A2**
(43) Date de publication de la demande: **11.04.2012**
(21) Numéro de dépôt: 11178360.1
(22) Date de dépôt: 22.08.2011
(51) Int. Cl.: G02B 6/44

(54) **Boîtier de raccordement de câbles de fibres optiques à cassettes amovibles d'épissurage et de lovage des surlongueurs**

(30) Priorité: 08.10.2010 FR 1058176
(71) Demandeur: Free Infrastructure, 75008 Paris (FR)
(72) Inventeur: Fortier, Eric, 77720 Aubepierre Ozouer Le Repos (FR); Binois, Johann, 78420 Carrières sur Seine (FR)
(74) Mandataire: Dupuis-Latour, Dominique

(57) **Abrégé**

Ce boîtier (20) est notamment destiné au câblage d'immeubles pour la fourniture de services de communication haut-débit par fibres optiques. Il permet le raccordement d'un câble d'adduction contenant une pluralité de fibres optiques entrantes à un câble d'abonné contenant une pluralité de fibres optiques sortantes correspondantes. Une cassette comprend un support (100) d'épissures sur lequel chaque fibre optique entrante est raccordée à une fibre optique sortante. Chaque cassette comprend une patte (302) montée à rotation sur la cassette, destinée au rangement de la cassette dans le boîtier. Le boîtier comporte des moyens (21, 22) démontables de fixation de cette patte. Ceci permet, après mise en place de la cassette dans le boîtier, de lover les surlongueurs de fibres dans la bobine du flasque de protection par rotation de la cassette par rapport à la patte de rangement, cette patte demeurant fixe par rapport au boîtier pendant le mouvement de rotation.

## Description

La présente invention concerne un boîtier de raccordement comprenant au moins une cassette de raccordement d'un câble d'adduction, contenant une pluralité de fibres optiques, à un câble d'abonné contenant une pluralité de fibres optiques correspondantes.

L'invention trouve une application particulièrement avantageuse dans le domaine du câblage d'immeubles pour la fourniture de services de communication haut-débit par fibres optiques.

Le câblage en fibres optiques d'un immeuble d'habitation, par exemple, dont certains occupants sont des abonnés à des services de communication haut-débit, est réalisé au moyen d'un faisceau de distribution qui parcourt l'immeuble le long d'une colonne montante de façon à pouvoir desservir les logements des abonnés. Outre le faisceau de distribution haut-débit, la colonne montante peut intégrer d'autres types de câbles, comme des câbles téléphoniques, de télévision, etc.

En général, un faisceau de distribution contient un grand nombre (de 144 à 288 par exemple) de câbles dits "câbles d'adduction", chaque câble d'adduction étant destiné à être raccordé à un câble, dit câble d'abonné, installé dans le logement d'un abonné.

Un câble d'adduction comprend un certain nombre de fibres optiques individuelles, quatre par exemple, chargées de transporter les signaux optiques nécessaires pour assurer la communication haut-débit. Symétriquement, un câble d'abonné comprend également quatre fibres optiques, chaque fibre optique du câble d'adduction devant être raccordé à la fibre optique correspondante du câble d'abonné.

Dans un immeuble, ce raccordement est effectué, au niveau de chaque palier, dans un boîtier appelé "boîtier de raccordement" ou "boîtier de palier" (BDP). Plus précisément, le boîtier de palier est monté sur la goulotte de la colonne montante de façon à être traversé par le faisceau de distribution.

Un installateur chargé de réaliser le raccordement dégage du faisceau de distribution, à l'intérieur du boîtier, un ou plusieurs câbles d'adduction en fonction du nombre d'abonnés à raccorder sur un même palier de l'immeuble. Chaque câble d'adduction est alors dénudé de manière à faire apparaître sur une longueur donnée les fibres optiques individuelles, qu'on appellera dans la suite "fibres entrantes". La même opération est effectuée du côté abonné, à savoir mise à nu du câble d'abonné et séparation des fibres optiques individuelles, appelées cette fois "fibres sortantes".

Il faut ensuite raccorder effectivement chaque fibre optique entrante à la fibre optique sortante correspondante. La technique la plus utilisée dans ce but est celle de l'épissurage qui, dans le cas des fibres optiques, pose de réelles difficultés de mise en oeuvre liées à l'extrême fragilité des fibres. C'est pour cette raison qu'il est pratiquement exclu de réaliser l'épissage des fibres à l'intérieur du boîtier de raccordement lui-même car, dans ces conditions, l'installateur ne dispose pas d'un espace suffisant pour pouvoir manipuler les fibres facilement et en toute sécurité.

Le FR 2 579 330 A1 et le WO 2009/001013 A1 (Free) proposent à cet effet d'utiliser un support amovible, appelé "galette" ou "support d'épissures", qui peut être extrait du boîtier de manière à permettre à l'installateur de réaliser l'épissurage sur ce support, hors du boîtier, donc sans problème d'encombrement. Après épissurage, le support d'épissures est replacé dans le boîtier de raccordement.

Du fait que l'épissurage a été effectué à distance du boîtier, il subsiste des surlongueurs importantes de fibres des câbles d'adduction et d'abonné, qui doivent être impérativement lovées afin qu'elle puissent être convenablement stockées dans le boîtier.

Avec les boîtiers décrits par ces documents, l'enroulement des surlongueurs se fait au moment de la mise en place des supports d'épissures dans le boîtier, cet enroulement étant effectué par l'installateur au fur et à mesure du rapprochement du support d'épissures vers sa position finale dans le boîtier.

Or l'encombrement à l'intérieur des boîtiers oblige généralement les installateurs à effectuer cette opération sensible de lovage des surlongueurs de fibres dans des conditions d'accessibilité au boîtier très difficiles, qui rendent la manipulation des câbles et des fibres délicate et donc dangereuse pour l'intégrité des fibres optiques.

L'un des buts de l'invention est de remédier à ces difficultés, en proposant un boîtier de raccordement offrant aux installateurs un système de lovage ergonomique leur permettant de lover les surlongueurs de fibres directement dans le boîtier de raccordement.

Essentiellement, l'invention propose une configuration de boîtier où chaque cassette est montée à rotation sur une patte support ou "patte de rangement" elle-même fixée au boîtier. Cette configuration permet, une fois la cassette mise en place dans le boîtier, de faire tourner cette cassette par rapport au boîtier sans la dissocier du boîtier. Il sera ainsi possible d'effectuer le lovage final des surlongueurs de fibres optiques avec la cassette en place.

Ainsi, après avoir lové les longueurs de fibres optiques dénudées dans le support d'épissures et les surlongueurs de fibres dans la bobine du flasque de protection, l'installateur met en place la cassette dans le boîtier de raccordement à l'aide de la patte de rangement en coopération avec les moyens de fixation correspondants. Si des surlongueurs résiduelles subsistent encore, elles peuvent être lovées définitivement en faisant tourner la cassette par rapport à la patte de rangement, laquelle est fixe par rapport au boîtier, de manière à enrouler ces surlongueurs résiduelles dans la bobine de la cassette.

Plus précisément, l'invention propose un ensemble comprenant les éléments connus, par exemple d'après le FR 2 579 330 A1 précité, indiqués dans le préambule de la revendication 1. Les éléments propres à l'invention sont énoncés dans la partie caractérisante de cette revendication 1, et les sous-revendications visent diverses caractéristiques subsidiaires avantageuses.

On va maintenant décrire un exemple de mise en oeuvre du dispositif de l'invention, en référence aux dessins annexés où les mêmes références numériques désignent d'une figure à l'autre des éléments identiques ou fonctionnellement semblables.

La Figure 1 a est une vue de dessus d'un support d'épissures d'une cassette de raccordement conforme à l'invention.

La Figure 1b est une vue de dessous du support d'épissures de la Figure 1 a.

La Figure 2a est une vue de dessus en perspective d'un flasque de protection d'une cassette de raccordement conforme à l'invention.

La Figure 2b est une vue de dessous en perspective du flasque de protection de la Figure 2a.

La Figure 2c est une vue de côté du flasque de protection des Figures 2a et 2b.

La Figure 3 est une vue de face d'une patte de rangement d'une cassette de raccordement conforme à l'invention.

La Figure 4a est une vue de face d'une cassette de raccordement conforme à l'invention munie de la patte de rangement de la Figure 3.

La Figure 4b est une vue en coupe selon la ligne A-A de la Figure 4a.

La Figure 5 est une vue en perspective d'un boîtier de raccordement conforme à l'invention.

La Figure 6 est une vue en perspective du boîtier de raccordement de la Figure 5, le flasque de protection ayant été retiré.

La description qui va suivre en regard des dessins annexées, donnés à titre d'exemple non limitatif, fera bien comprendre en quoi consiste l'invention et comment elle peut être réalisée.

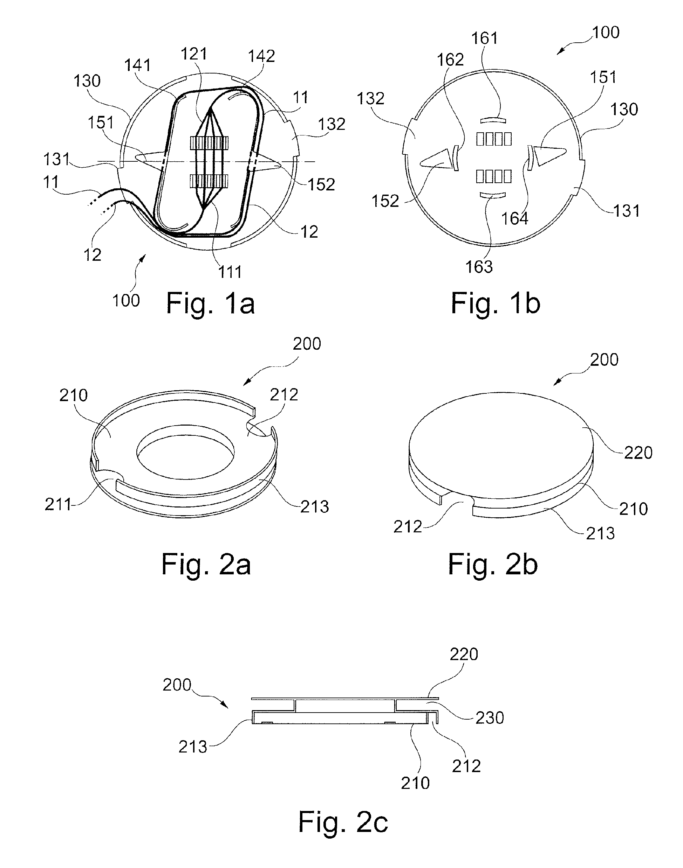

Sur les Figures 1 a et 1b est représenté un support 100 d'épissures pour une cassette de raccordement de câbles de fibres optiques, dans le cadre du câblage d'immeubles d'habitation pour la fourniture de services haut-débit par communication au moyen de fibres optiques.

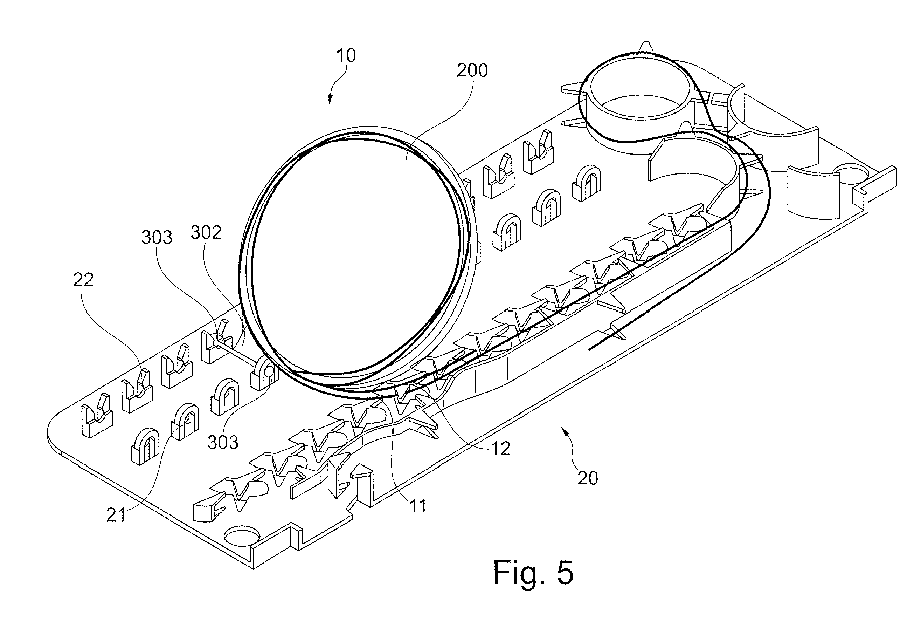

Comme l'indique plus particulièrement la Figure 5, la cassette 10 est destinée à raccorder à l'intérieur d'un boîtier 20 de raccordement, ou boîtier de palier, au moins un câble 11 d'adduction extrait d'un faisceau de distribution, non représenté, à un câble 12 d'abonné installé dans le logement d'un abonné aux services haut-débit. Le faisceau de distribution contient, par exemple, de 144 à 288 câbles d'adduction et parcourt l'immeuble le long de la colonne montante, afin de desservir, palier par palier, les logements d'abonné, eux-mêmes équipés de câbles d'abonné.

Les câbles d'adduction et d'abonné comprennent dans une gaine plastique une pluralité de fibres optiques individuelles, quatre par exemple, chaque fibre individuelle entrante d'un câble 11 d'adduction devant être raccordée à la fibre individuelle sortante correspondante d'un câble 12 d'abonné.

Une première opération à effectuer par un installateur consiste donc, à chaque palier, à extraire du faisceau de distribution, le ou les câbles d'adduction devant être raccordés à des câbles d'abonné et à dénuder ces câbles afin de dégager les fibres optiques individuelles de chaque câble.

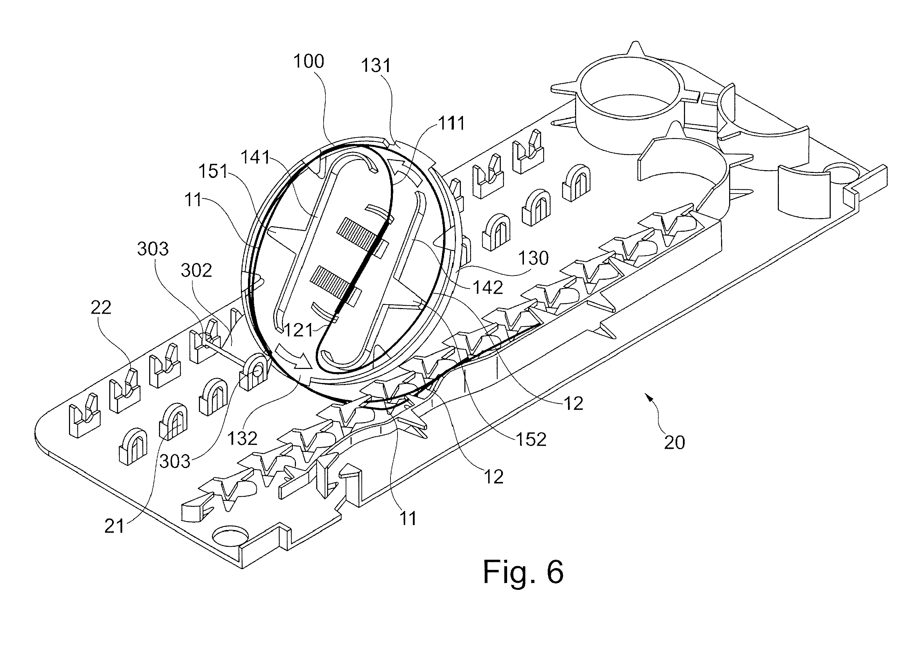

Le raccordement fibre à fibre est réalisé sur le support 100 d'épissures. La Figure 1a montre l'épissurage des quatre fibres optiques individuelles entrantes, référencées génériquement 111, d'un câble 11 d'adduction aux quatre fibres optiques individuelles sortantes, référencées génériquement 121, d'un câble 12 d'abonné. La Figure 6 est une représentation simplifiée montrant une seule fibre individuelle de chaque câble.

Le support 100 d'épissures a une forme générale circulaire et présente sur son pourtour un rebord cylindrique 130 percé d'au moins une encoche latérale, ici les encoches 131, 132, permettant le passage des câbles 11 d'adduction et 12 d'abonné à travers le rebord cylindrique 130.

Le support 100 d'épissures est amovible, au sens où il peut être complètement retiré du boîtier 20 de raccordement de façon à permettre l'épissurage des fibres optiques entrantes 111 et sortantes 121 hors du boîtier, donc sans aucune gêne pour l'installateur qui devient ainsi parfaitement libre de ses mouvements pour pouvoir manipuler fibres et câbles sans aucune contrainte.

Après épissurage des fibres, l'installateur love à l'intérieur du support 100 les longueurs de fibres optiques dénudées et les amorces de câbles gainés 11, 12 s'étendant dans le support, jusqu'à une encoche telle que l'encoche 131 sur la Figure 1 a par exemple. Pour ce faire, le lovage est facilité par la présence dans le support 100 de reliefs d'enroulement, tels que des guides 141, 142 d'enroulement et des pattes 151, 152 d'immobilisation des câbles.

Les Figures 2a, 2b, 2c montrent un deuxième composant de la cassette 10 selon l'invention.

Il s'agit d'un flasque 200 de protection constitué en deux parties à savoir, d'une part, une première joue 210 de forme sensiblement circulaire, présentant sur son pourtour un rebord cylindrique 213 dont le diamètre est tel que le rebord 213 de la joue 210 peut s'emboîter sur le rebord 130 du support 100 d'épissures et, d'autre part, une deuxième joue 220 formant une bobine 230 avec la première joue 210.

On peut voir sur les Figures 2a, 2b, 2c que la première joue 210 porte au moins une ouverture latérale, ici les ouvertures 211, 212.

Après avoir lové sur le support 100 d'épissures les fibres optiques dénudées et les amorces des câbles 11, 12, l'installateur emboîte la première joue 210 du flasque 200 de protection sur le support 100, réalisant ainsi un logement fermé dans lequel les épissures des fibres, particulièrement fragiles, se trouvent parfaitement protégées d'éventuelles agressions mécaniques extérieures. L'ensemble du support 100 et du flasque 200 de protection constitue la cassette 10 de raccordement proprement dite. Lors de la mise en place du flasque 200 de protection sur le support 100 d'épissures, les ouvertures 211, 212 du flasque sont disposées en regard des encoches 131, 132 du support 100 afin de pouvoir sortir les câbles 11, 12 du support pour les amener face à la gorge 230 du flasque 200 de protection.

L'installateur est alors en mesure de lover dans la bobine 230 les surlongueurs des fibres des câbles 11 d'adduction et 12 d'abonné qui lui ont permis d'effectuer l'épissurage des fibres à bonne distance du boîtier 20. Bien entendu, le diamètre de la bobine 230 ne doit pas être trop petit, de manière à rester compatible avec la résilience du matériau constituant les fibres optiques.

Après lovage des surlongueurs de fibres dans la bobine 230, la cassette 10 se trouve à proximité immédiate du boîtier 20 de raccordement et prête à y être rangée.

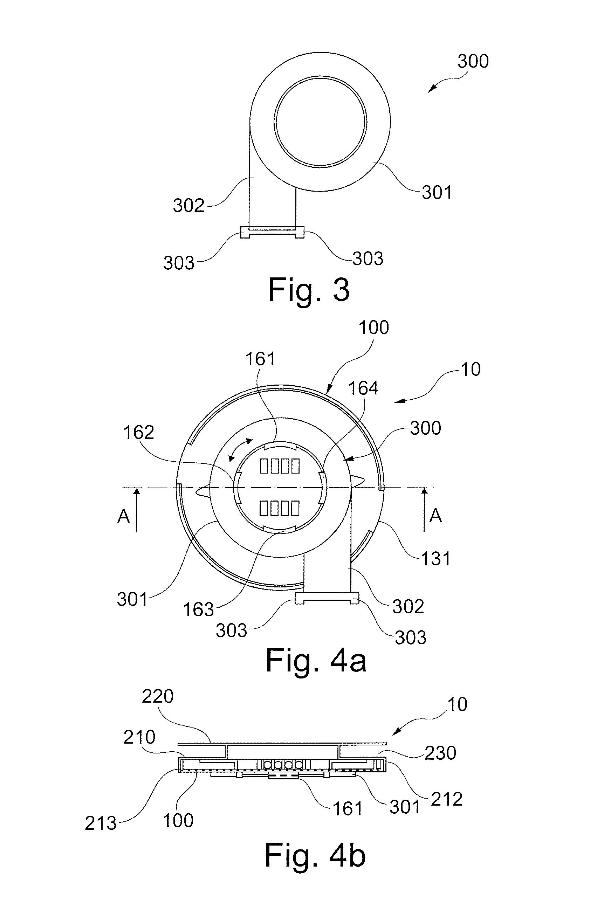

A cet effet, l'installateur place au dos du support 100 d'épissures une patte 300 de rangement de la cassette 10 dans le boîtier 20, telle qu'illustrée sur la Figure 3 (le terme "dos" étant défini comme la face du support, représentée sur la Figure 1b, opposée à la face portant les épissures). L'ensemble constitué de la cassette 10 de raccordement et de la patte 300 de rangement est montré sur les Figures 4a et 4b.

La patte 300 est montée rotative sur le support 100 au moyen d'une portion annulaire 301 apte à être retenue sur le support par des clips 161, 162, 163, 164 courbes, ménagés sur le dos du support 100 d'épissures et présentant une courbure sensiblement identique à celle de la partie intérieure de la portion annulaire 301 de la patte 300.

Comme le montre la Figure 3, la portion annulaire 301 de la patte 300 est prolongée par une portion sensiblement droite 302 dont l'extrémité porte des moyens 303 de fixation destinés à coopérer avec des moyens de fixation correspondants ménagés dans le boîtier 20 de raccordement.

Dans l'exemple de réalisation des Figures 3, 5 et 6, les moyens 303 de fixation de la patte 300 sont deux axes cylindriques, tandis que les moyens de fixation du boîtier 20 sont, d'une part, une lumière 21 pouvant accueillir l'un des axes 303 et, d'autre part, un clip 22 dans lequel l'autre axe 303 est introduit à force.

Après avoir lové l'essentiel des surlongueurs de fibres dans la bobine 230, l'installeur met la cassette 10 de raccordement en place dans le boîtier 20 à l'aide des moyens de fixation décrits ci-dessus et, s'il reste encore quelques surlongueurs résiduelles, il peut achever très simplement leur lovage dans la gorge 230 en faisant tourner la cassette 10 sur elle-même grâce au montage à rotation de la patte 300 sur la cassette 10, cette dernière étant maintenue en position dans le boîtier 20 du fait que la patte 300 de raccordement demeure fixe dans ce mouvement de rotation.

On remarquera que la fixation de la cassette 10 dans le boîtier 20 de raccordement est démontable, et qu'un installateur peut à tout moment modifier le rangement des cassettes dans le boîtier 20. Pour retirer une cassette de l'endroit où elle se trouve, Il suffit de dégager à force celui des axes 303 qui est retenu dans le clip 22, l'autre axe sortant alors naturellement de la lumière 21.

## Revendications

1. Boîtier de raccordement d'au moins un câble (11) d'adduction contenant une pluralité de fibres optiques entrantes (111) à un câble (12) d'abonné contenant une pluralité de fibres optiques sortantes (121) correspondantes,
ce boîtier comprenant au moins une cassette (10) avec :
- un support (100) d'épissures sur lequel chaque fibre optique entrante (111) est raccordée à une fibre optique sortante (121) ;
- un flasque (200) de protection comportant une première joue (210) apte à être emboîtée sur le support (100) d'épissures ; et
- une deuxième joue (220) formant une bobine (230) avec la première joue,
la première joue (210) étant pourvue d'au moins une ouverture (211, 212) de passage des câbles du support d'épissures vers ladite bobine (230),
**caractérisé en ce que** :
- chaque cassette comprend une patte (300) de rangement montée à rotation sur la cassette (10), destinée au rangement de la cassette dans le boîtier (20) de raccordement ; et
- le boîtier (20) comporte des moyens (21, 22) de fixation de ladite patte
de rangement (300) de la cassette,
de manière à permettre, après mise en place de la cassette dans le boîtier à l'aide de la patte de rangement en coopération avec les moyens de fixation correspondants, le lovage de surlongueurs de fibres dans la bobine du flasque de protection par rotation de la cassette par rapport à la patte de rangement, cette patte demeurant fixe par rapport au boîtier pendant ce mouvement de rotation.

2. Boîtier selon la revendication 1, dans laquelle la patte (300) de rangement est montée à rotation sur le support (100) d'épissures de la cassette.

3. Boîtier selon la revendication 1, dans lequel lesdits moyens (21, 22) de fixation sont démontables.

4. Boîtier selon la revendication 5, dans lequel lesdits moyens (21, 22) de fixation démontables comprennent un moyen (22) de clipsage.
